# EUROPEAN PATENT SPECIFICATION

(11) **EP 3 962 153 B1**
(45) Date of publication and mention of the grant of the patent: **10.12.2025**
(21) Application number: 20192600.3
(22) Date of filing: 25.08.2020
(51) Int. Cl.: H04W 24/10, H04W 24/08

(54) **SIGNALLING DATA FOR TRAINING MACHINE LEARNING BASED PREDICTIVE HANDOVER**
SIGNALISIERUNGSDATEN FÜR DAS TRAINING VON AUF MASCHINENLERNEN BASIERTEN PRÄDIKTIVEN ÜBERGABEN
SIGNALISATION DE DONNÉES D'APPRENTISSAGE DE TRANSFERT PRÉDICTIF BASÉ SUR L'APPRENTISSAGE MACHINE

(43) Date of publication of application: 02.03.2022
(73) Proprietor: Nokia Technologies Oy, 02610 Espoo (FI)
(72) Inventor: MWANJE, Stephen, 84405 Dorfen (DE); ALI-TOLPPA, Janne, 82024 Taufkirchen (DE); VEIJALAINEN, Teemu, 00770 Helsinki (FI); MARTON, Kajo, 81539 München (DE)
(74) Representative: Mudge, Kevin

(56) References cited:
- US-A1- 2011 201 279
- US-A1- 2015 036 663
- ORANGE ET AL: "MDT Measurement Model", 3GPP DRAFT; R2-100239, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050420989
- "3 Generation Partnership Project; Technical Specification Group Radio Access Network; Universal Terrestrial Radio Access (UTRA), Evolved Universal Terrestrial Radio Access (E-UTRA) and Next Generation Radio Access; Radio measurement collection for Minimization of Drive Tests (MDT); Overall descripti", vol. RAN WG2, no. V16.1.0, 24 July 2020 (2020-07-24), pages 1 - 33, XP051925821, Retrieved from the Internet <URL:ftp://ftp.3gpp.org/Specs/archive/37_series/37.320/37320-g10.zip 37320-g10.doc> [retrieved on 20200724]

## Description

### FIELD

Various example embodiments relate to signalling between network and user equipment, and signalling data for training machine learning based predictive handover.

### BACKGROUND

In wireless cellular systems one aim is to provide seamless mobility for users, which enables the users with their user equipments (UEs), e.g. mobile devices such as smart phones, to move seamlessly within coverage area of a network. Mobility may be achieved through handover mechanism, in which the UE changes the cell.

Optimal timing for the handover may be predicted e.g. using machine learning (ML) based methods using measurement data from UEs as input data. The accuracy of such a ML-based predictive handover method increases as a function of the measurement collection frequency. However, measurement reporting with very high frequency would lead to significant consumption of UE resources and signaling overhead. Thus, there is a need for an efficient data collection mechanism.

US2015036663 discloses methods, systems, and devices for managing wireless communications. In the methods, systems, and devices, historical information associated with mobility patterns of a mobile device may be accessed. A mobility parameter may be modified for at least one neighboring cell of a set of neighboring cells for measurement by the mobile device. The mobility parameter may be modified based on the historical information associated with the mobility patterns of the mobile device.

US2011201279 discloses methods and apparatus to perform measurements. An example method for a user equipment (UE) to perform measurements in a mobile communication network comprises receiving configuration information comprising at least one of a validity state, a measurement activation criterion, a measurement deactivation criterion, a reporting criterion or a location request criterion to configure a measurement, and performing the measurement based on the configuration information.

Orange et al. "MDT Measurement Model", 3GGP Draft; R2-100239, 3rd Generation Partnership Project (3GPP),XP050420989 discloses a model of MDT measurements, wherein the measurement configuration is controlled by the network either by broadcasting a MDT measurement job configuration as a part of system information and/or by using UE specific RRC signalling.

### SUMMARY

The invention is defined by the independent claims. The dependent claims specify the preferred embodiments of the invention.

In the following, the embodiments of the invention are described with particular reference to Figs. 5-8, while the other embodiments and/or examples of the disclosure are provided for illustrative purposes to support a better understanding of the invention.

### BRIEF DESCRIPTION OF THE DRAWINGS

Fig. 1 shows, by way of example, a network architecture of communication system;
Fig. 2 shows, by way of example, labelling for predictive handover;
Fig. 3 shows, by way of example, handover-events logging unit and its interfaces to the network;
Fig. 4 shows, by way of example, a flowchart of a method;
Fig. 5 shows, by way of example, signalling between network and user equipment;
Fig. 6 shows, by way of example, logging a successful handover;
Fig. 7 shows, by way of example, logging an unsuccessful handover;
Fig. 8 shows, by way of example, discarding a log;
Fig. 9 shows, by way of example, a block diagram of an apparatus; and
Fig. 10 shows, by way of example, a flowchart of a method.

### DETAILED DESCRIPTION

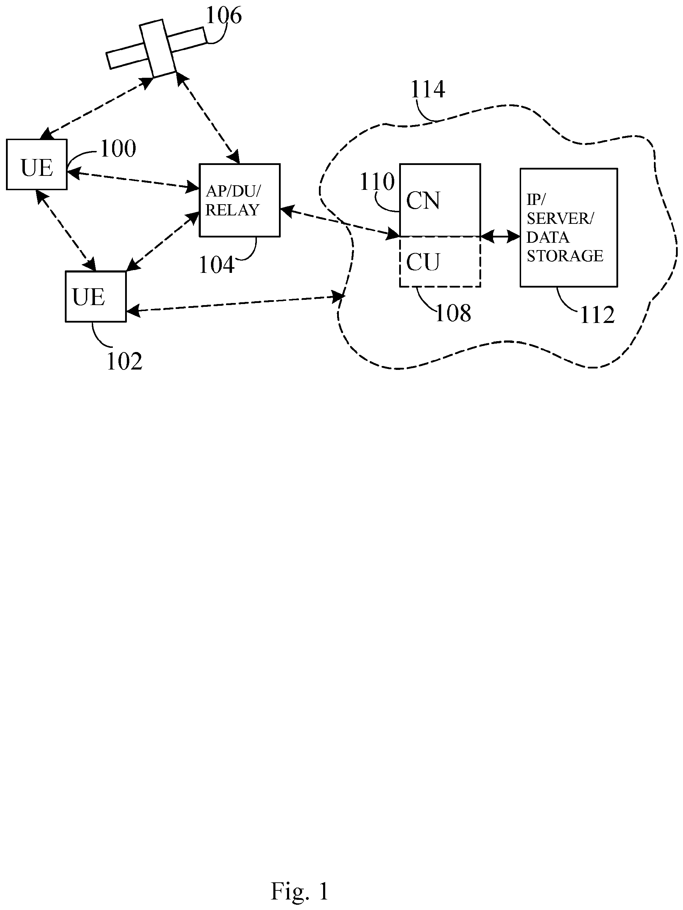

Fig. 1 shows, by way of an example, a network architecture of communication system. In the following, different exemplifying embodiments will be described using, as an example of an access architecture to which the embodiments may be applied, a radio access architecture based on long term evolution advanced (LTE Advanced, LTE-A) or new radio (NR), also known as fifth generation (5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1. The embodiments are not, however, restricted to the system given as an example but a person skilled in the art may apply the solution to other communication systems provided with necessary properties. Examples of such other communication systems include microwave links and optical fibers, for example.

The example of Fig. 1 shows a part of an exemplifying radio access network. Fig. 1 shows user devices 100 and 102 configured to be in a wireless connection on one or more communication channels in a cell with an access node, such as gNB, i.e. next generation NodeB, or eNB, i.e. evolved NodeB (eNodeB), 104 providing the cell. The physical link from a user device to the network node is called uplink (UL) or reverse link and the physical link from the network node to the user device is called downlink (DL) or forward link. It should be appreciated that network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-tocomputer interaction.

Additionally, although the apparatuses have been depicted as single entities, different units, processors and/or memory units (not all shown in Fig. 1) may be implemented inside these apparatuses, to enable the functioning thereof.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 104) and non-real time functions being carried out in a centralized manner (in a centralized unit, CU 108).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the constellation may cover several satellite-enabled network entities that create on-ground cells. The on-ground cells may be created through an on-ground relay node 104 or by a gNB located on-ground or in a satellite.

Handovers between cells are one of the main causes for possible service degradation/interruption. In the context of handovers, automation, e.g. cognitive automation, would be beneficial. In order to achieve better automation, exact determination or even prediction of points where handovers are triggered, both in time and space, may be needed. With a precise knowledge of these handover points, handover triggers may be optimized to simultaneously minimize the number of handovers, and subsequently the ping-pong handovers, that are triggered. In addition, the radio link failures, i.e. too early and late handovers, that may result from improper handover settings, may be minimized. It is desired that the selected handover trigger settings are specific to a given cell-pair boundary and preferably to a given location and user mobility along that boundary. The minimization of service interruption caused by handovers is critical for e.g. Ultra-Reliable Low Latency Communication (URLLC) which is a major feature of 5G.

Predictive handover concept may be applied when aiming to trigger handover in more timely and reliable fashion such that for example the handover interruption time is minimized. In predictive handover, the UE uses a machine learning (ML) model to predict when and to which target cell to initiate handover. For prediction, the ML model needs, for example, continuous stream of reference signal received power (RSRP) measurements, from specific cells, e.g. serving cell and neighboring cells, with certain measurement frequency. For training, the ML model may utilize logged measurements from the specific cells with the same frequency as the prediction. With successful usage of ML-based predictive handover, radio link failures may be avoided, too late and/or early handovers may be avoided, and ping-pong handovers may be avoided.

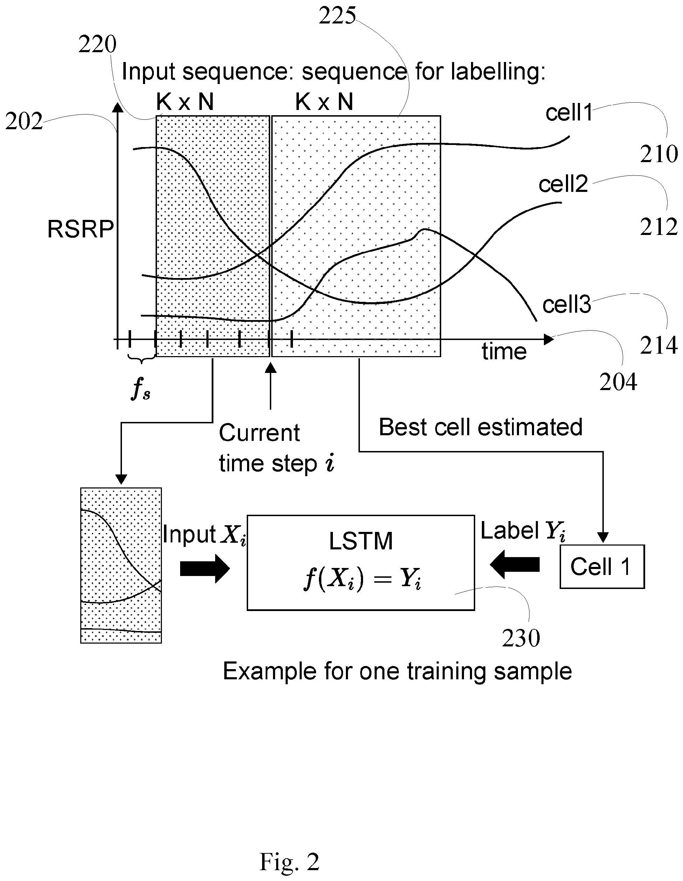

Fig. 2 shows, by way of example, labeling for predictive handover. Y-axis 202 represents RSRP and X-axis represents time. Measurement collection frequency has been indicated as *fₛ*. RSRP measurements relating to cell1 210, cell2 212 and cell3 214 have been reported by an UE. The training data is split into input and output frames. An input frame, i.e. input sequence 220, comprises N samples in time from K cells, while an output frame, i.e. sequence for labelling 225, consists of M samples in time from K cells after the input frame. The output frame is used to estimate the optimal handover target for the input, and this process may be called as labeling. The labeling allows the model to recognize the optimal handover decision by fingerprinting a certain looking time series. For example, neural network architecture, e.g. recurrent neural network architecture such as LSTM 230 may be used in the learning process.

Simulation results show that the performance gains increase as a function of measurement frequency and that very frequent measurements, e.g. in less than 10 ms intervals, may be needed to get the highest performance gains. In addition, simulation results show that by including several neighboring cells to the handover decision making, a timely handover may be predicted and number of radio link failures may be reduced significantly compared to baseline solutions, e.g. mobility robustness optimization (MRO). Measuring several specific cells over time with sufficient frequency gives information on inter-cell dependencies and spatial properties, allowing for the triangulation of the user location, speed and direction, which is information that enables ML algorithms to learn improved handover policies compared to baseline methods.

Since accuracy of ML-based predictive handover concept increases as a function of the measurement collection frequency, the required UE measurement collection frequency would be high in order to achieve the best performance. Continuous measurement reporting e.g. approximately every 10 ms, would lead to significant consumption of UE resources and signaling overhead.

There is provided an apparatus and a method for data collection for machine learning based predictive handover.

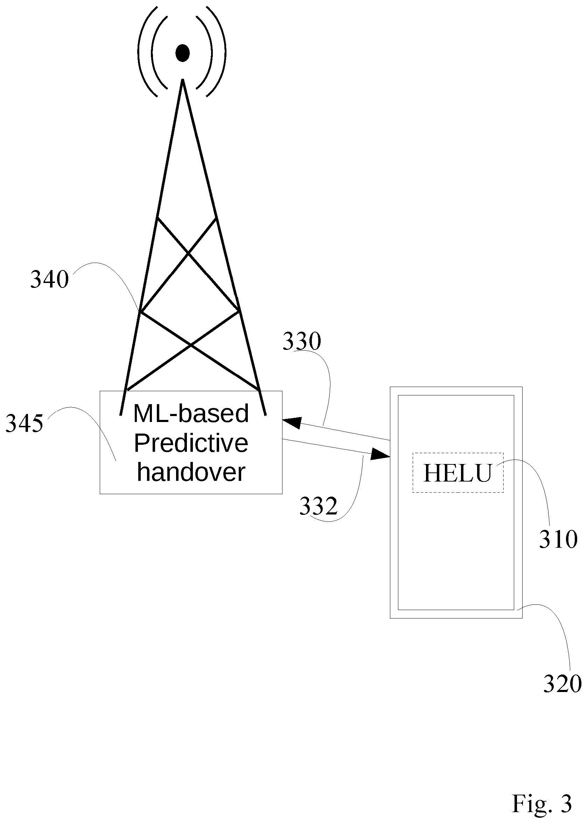

The method as disclosed herein may be implemented in the user equipment, by a handover-events logging unit (HELU) residing in the UE. The HELU may manage the logging and provision of data for predictive ML-based handover. Fig. 3 shows, by way of example, the handover-events logging unit 310, residing in the UE 320, and its interfaces 330, 332 to the network 340. The HELU may assume that the network implements the predictive ML-based handover 345, to which the HELU provides the data to be used for training the predictive ML model, e.g. predictive handover ML model. The HELU may, for example, use and/or extend minimization of drive-testing (MDT) data collection mechanism for collecting UE measurement data.

The HELU, which may be implemented in hardware or software on the UE, may take as input a configuration message from the network. Then, the HELU may process the configuration, collect data to obtain a data log, and provide the data log, or part of the data log, to the network to then be used for training the predictive handover model. In certain situations, the data log may be discarded, as described later.

The configuration message may e.g. define the specific characteristics of the data log to be provided. Further, the configuration message may comprise trigger conditions and configurations for logging events, or measurement events. For example, starting conditions for logging, stopping conditions for logging, and/or reporting conditions for logging may be comprised in the configuration message received from the network. The respective events may be referred to as Start-log, Stop-log and Report-log events. Start-log and/or Stop-log events may be fixed, e.g. pre-defined and stored, in the UE or the configuration message may configure conditions in the UE which then trigger the events. The configuration message may define conditions and rules for pre-processing the collected measurements, or collected log, before reporting it, reporting only the required part of the logged data, or discarding the log.

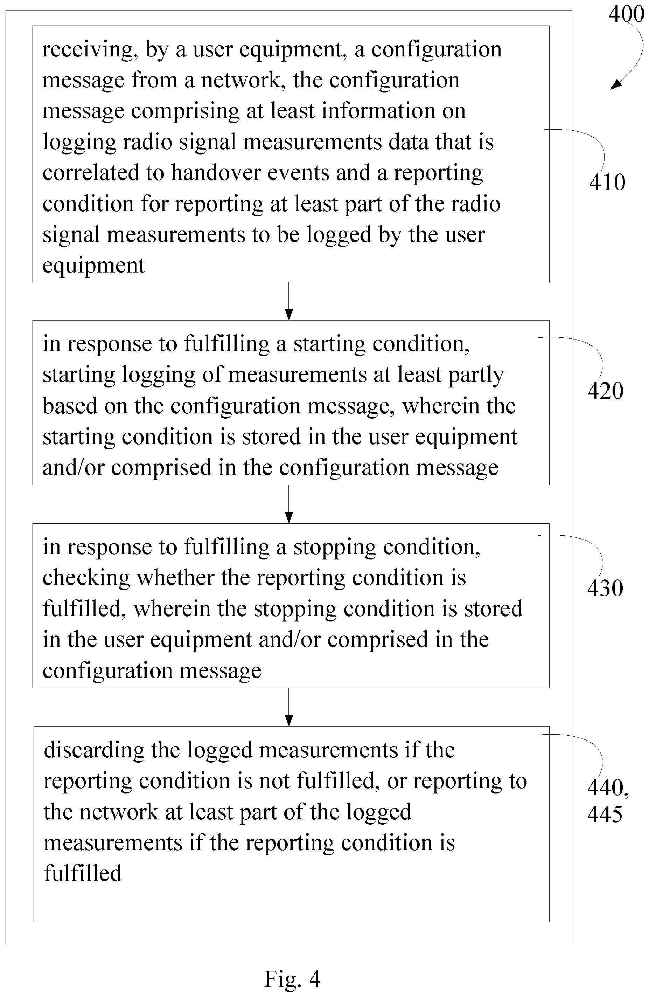

Fig. 4 shows, by way of example, a flowchart of a method 400 for data logging for machine learning based predictive handover. The phases of the method may be performed e.g. by the UE, e.g. by the HELU residing in the UE. The method 400 comprises receiving 410, by a user equipment, a configuration message from a network, the configuration message comprising at least information on logging radio signal measurements data that is correlated to handover events and a reporting condition for reporting at least part of the radio signal measurements to be logged by the user equipment. The method 400 comprises in response to fulfilling a starting condition, starting 420 logging of measurements at least partly based on the configuration message, wherein the starting condition is stored in the user equipment and/or comprised in the configuration message. The method 400 comprises in response to fulfilling a stopping condition, checking 430 whether the reporting condition is fulfilled, wherein the stopping condition is stored in the user equipment and/or comprised in the configuration message. The method 400 comprises discarding 440 the logged measurements if the reporting condition is not fulfilled, or reporting 445 to the network at least part of the logged measurements if the reporting condition is fulfilled.

The method as disclosed herein enables optimal collection of the right data at the right granularity in order to enable appropriate training of the ML-based predictive handover triggering. The method as disclosed herein minimizes the signalling by avoiding unnecessary data transfer while providing the most relevant training data which improves the ML training for better performance. The reduction in overhead may be achieved by maximizing the proportion of measurements in the handover regions and near cell edges, and/or by providing filtering methods to pre-process the data and provide e.g. that portion of the data that is critical in learning the important handover events. The method as disclosed herein enables collection and/or logging of UE measurements, e.g. RSRP and location, in a way that is optimized for the predictive MRO, e.g. by identifying the appropriate regions and times where such data should be collected.

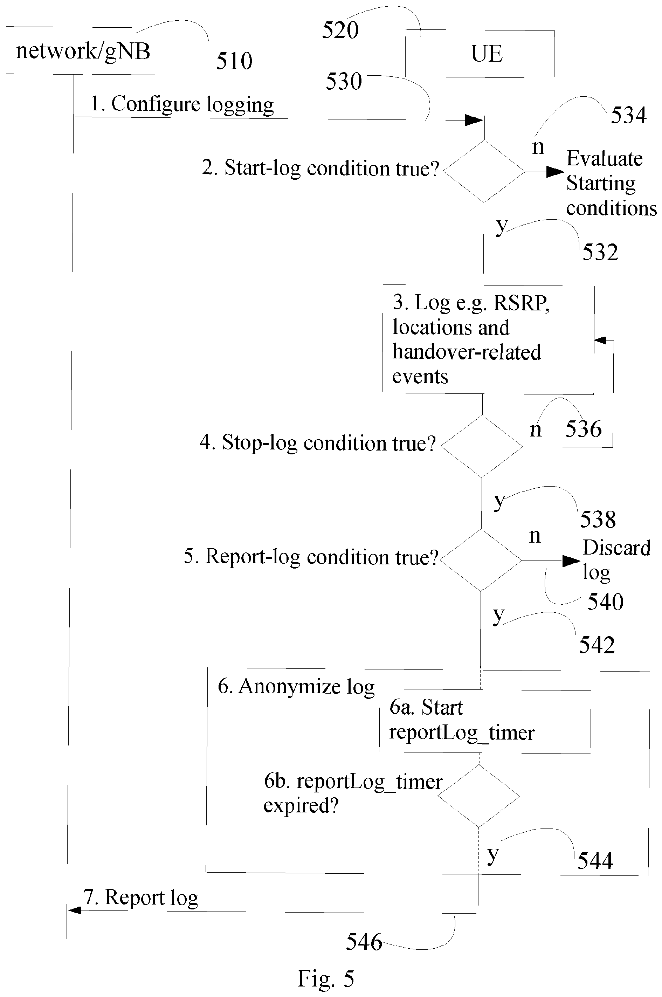

Fig. 5 shows, according to the invention, signalling between network and UE in data collection mechanism for training predictive handover models. On the vertical axes are shown, on the left, the network side, and on the right, the UE. The network side 510 may be e.g. the network 340 of Fig. 3, and the UE 520 may be e.g. the UE 320 of Fig. 3. Time advances from the top towards the bottom.

In step 1, the network configures the appropriate UEs with handover-related log conditions that define, for example, the kind of data to be logged and how the data log is to be processed. The UE 520 receives 530 a configuration message from the network 510. The configuration may be executed, for example, using RRC connection reconfiguration procedure by adding new messages that deliver the configuration presented herein. The configuration message comprises at least information on logging radio signal measurements data that is correlated to handover events and a reporting condition. The configuration message may comprise information on logging radio signal measurements data that is correlated to handover events, i.e. may predict handover events and/or a handover. Measurements may comprise e.g. RSRP and/or location of the user equipment. Information on logging may comprise e.g. starting conditions (Start-log events), stopping conditions (Stop-log events), and/or reporting conditions (Report-log events). Starting conditions and/or stopping conditions are comprised in the configuration message and/or stored in the \UE. Starting conditions and the stopping conditions may be specified in one configuration or they may be configured separately.

Information on logging may further specify the characteristics of the data to be logged and the characteristics of the log itself. For example, the log configuration may specify the length of the log, i.e. the number of measurements to record. For example, the UE may be configured to buffer N latest measurements until handover, and e.g. discard samples older than N, and another M samples after handover. Thus, the report may be configured to include N+M records. This allows collection of data before handover, i.e. input for ML, and after handover, i.e. for label calculation. Information on logging may specify the frequency at which the measurements should be taken, or the UE may be allowed to choose its frequency e.g. depending on how fast it is moving.

In step 2, the UE evaluates if the configured starting conditions i.e. Start-log condition is fulfilled. If the condition is fulfilled 532 (y=yes), the UE starts logging (step 3) the data. Otherwise, i.e. if the condition is not fulfilled 534 (n=no), the UE may continue to evaluate the starting conditions.

It is to be noted that the UE may perform the measurements continuously, but logging the measurements here means that the measurements are collected e.g. in a log or register or report, which is then reported to the network if reporting conditions are fulfilled. The UE may measure e.g. reference signal received power (RSRP) and location of the UE. Further, the UE may log the experienced handover events, e.g. time points of the handover events. Measurements are needed, e.g. only needed, on the cell edge. Therefore, the logging and reporting are configured by the network through specific conditions. The measurements and/or the data to be included in the log may comprise e.g. one or more of: the observed RSRP measurements, location of the UE, and the experienced handover events. The log to be reported may comprise radio measurement data before and after the handover events to support training of the ML algorithm according to the observed events in the handover region. The radio measurements may be e.g. RSRP from group of cells, e.g. specific cells, or N strongest cells.

Starting condition starts the logging of measurements, e.g. RSRP and optionally location measurements, when the UE is approaching cell edge. The starting condition may use and/or extend logged MDT. The starting condition may apply to both connected and idle UEs. The starting condition may be implemented e.g. as a threshold for signal strength of the serving cell, the signal strength of the second strongest cell, or the difference between the signal strengths of the serving cell and the second strongest cell. The starting condition may be triggered by any measurement event, e.g. an event based on ML inference, or by other potentially more complex conditions.

The starting condition may be configured to ensure that at least the required number of measurements before the handover, that is needed by the predictive ML-based handover, is logged. For example, it may be required that a sequence of N measurements before a handover is included. This then requires that a buffer of length N is permanently kept e.g. through a first in first out mechanism in a memory, e.g. in the memory of the UE. In response to detecting a handover, a pre-determined number of measurements before the handover may be added to log.

The starting condition may be based on existing measurement events. In a non-claimed example, neighboring cell may become better than the serving cell by a specified offset (event A3), which may be a trigger to start logging.

According to the invention, the starting condition is a new RSRP difference between the serving cell and the candidate target cell offset: if (serving cell X - target cell Z) <= pre-determined threshold offset Y.

The starting condition may be based on events related to location coordinates of the UE. In a non-claimed example, logging may be started when the UE's distance to a cell is less than or equal to a pre-determined value.

Thus, to in non-claimed examples, the starting conditions, or start-log conditions, may be based on, at least, one or more of
- existing measurement events, e.g. A3 i.e. neighboring cell becomes better than the serving cell by a specified offset;
- cell specific measurement events, e.g. RSRP of cell 1 <= pre-determined threshold;
- location of the UE, e.g. distance of the UE to a specific coordinate <= pre-determined threshold;
- several conditions, e.g. serving-cell RSRP < X AND candidate target cell-RSRP > Y;
- time of measurements;
- number of measurements, e.g. pre-determined number of measurements measured before handover is retrieved from buffer memory after detected handover
- handover conditions, e.g. any handover or handover to specific pre-determined cell;

In step 3, the UE keeps logging the data and/or measurements, e.g. RSRP, locations, and/or handover-related events. While logging, the UE 520 evaluates if the configured stopping condition i.e. Stop-log condition is fulfilled (step 4). If not 536, it continues with the logging.

Stopping condition determines when logging should stop. In non-claimed examples, the stopping condition may be implemented e.g. as a threshold for signal strength of the serving cell, the signal strength of the second strongest cell, or the difference between the signal strengths of the serving cell and the second strongest cell. The stopping condition may be implemented as time of measurements and/or number of measurements since the latest handover, or radio link failure. For example, the logging may be configured to stop after pre-determined number M of measurements after detected handover. This way it may be ensured that the collected data comprises at least the required number of measurements after the handover that is needed for the labeling process of the predictive ML-based handover. The stopping condition may enable continuous logging over and after the handover. The stopping condition may allow for logging over multiple consecutive handovers.

The stopping condition may be different for idle UEs from that for connected, active UEs. For example, the idle UE condition may comprise, e.g. besides the RSRP threshold of the serving and the second strongest cell, the time since last change of camping cell.

If the Stop-logging condition is fulfilled 538, the UE may stop logging and may check its configured conditions for reporting the log (step 5). If the reporting conditions are not fulfilled 540, the UE may discard the log.

The reporting conditions may comprise a set of pre-processing rules for reporting the collected log. According to the invention, conditions for reporting the log comprise one or more of:
- the log comprises handover(s); - a radio link failure has been detected;
   and may furthermore comprise one or more of:
   - pre-determined sufficient number of measurements have been logged before (N) and after (M) the handover or radio link failure;
   - pre-determined sufficient number of samples to be reported back to the network outside the handover sequences, i.e. outside the N samples before the handover and M samples after the handover.
   The report may comprise the cause of the radio link failure, e.g. the failure being due to the handover being executed early, late or to a wrong cell.

Thus, the reporting conditions may define events that must have happened during the logging for the log to be reported. Example events are a handover executed during the logging period or a radio link failure at any point during the logging. The reporting conditions may specify rules on which part of the log (if any) is to be reported. For example, the number of entries before and after a handover may be reported, which may be only a subset of what is logged. These rules may, alternatively, be defined in the configuration message.

If the reporting conditions are fulfilled 542, the UE may anonymize the log in step 6 to ensure that the privacy of the user is protected. For example, the UE may start a timer, e.g. reportLog_timer (step 6a). The log may be reported when that timer expires (step 6b) 544, i.e. the log may be reported after a pre-determined time period. Since the UE reports the log comprising its location after a delay, no one can track its exact (quasi) instantaneous location. Moreover, the log may be reported without a time stamp, in which case even the historical presence at such a reported location remains anonymous. In some cases, however, the log may be time stamped. Timestamping ensures that the ML-model is trained using data that has been generated within a relevant time period, e.g. such that the log comprises required number of measurement before and after a handover.

If the location of the UE has not been logged, the log may be reported without anonymization.

A certain period of time is needed for anonymization of the log. The network may need to take this into account when configuring the UE so that the configuration does not imply that the log will be delivered within the handover execution time scale.

If the reporting conditions are fulfilled and possible anonymization is successful, the UE reports 546 the log to the network (step 7).

The conditions for reporting may be different than the conditions for starting the logging and/or stopping the logging. In a non-claimed example, starting the logging may be triggered by an executed handover, while reporting may be triggered by an occurrence of a radio link failure.

The UEs required to report do not need to include every UE. The UEs required to report may be randomly selected which helps anonymization. The reporting may be opt-out, but by default should be enabled on capable UEs.

The report may be encrypted and sent when the device is not actively in use. As the communication of the report, i.e. uploading the report, is not time-sensitive, the encryption and the reporting may be done in off hours, when the UE and/or the network is not heavily in use. This will save bandwidth during busy hours.

The reported log may be stamped with UE's measurement events, and handover execution point within the record sequence.

If the reporting condition is not fulfilled 540, then UE discards the logs. For example, if a handover does not take place before the Stop-logging condition, e.g. based on a timer, is fulfilled, the logging is terminated and nothing is reported. This way, sending measurement logs in vain to the network may be avoided and the signaling overhead may be reduced. In addition, UE saves memory if it may discard the logs that are not needed.

The network may signal to the UE to discard the logged data given some network side conditions. For example, if the network state has significantly changed, e.g. if a new cell has been added or transmit power for a certain cell has been changed, all the logged data for a particular location may be invalidated. Thus, the UEs who have logged such data need not transmit it. Alternatively, the network may no longer be interested in learning because it has learned enough. Therefore, the network may signal to the user to stop logging and/or to discard the logged data in order to conserve UE battery and storage.

The log reporting may be implemented via signaling as a new RRC measurement report. Alternatively, the log report may be delivered via a new UE trace that is configurable using MDT tracing. The log message may include, for example, at least a hash object of location information and RSRP measurements of the serving and possible target neighbouring cells and possibly handover events experienced by the UE.

As an example, the configuration message sent from the network 510 to the UE 520 may comprise at least measurement configuration, starting conditions, log entries, stopping conditions, and/or reporting conditions. For example, the configuration message may comprise or be indicative of at least
- measurement configuration: collect N samples before handover, and M samples after handover
- starting conditions: start logging if serving cell RSRP < strongest candidate RSRP + Y (pre-determined offset value)
- indication on log entries: measurement of serving cell and either all candidate target cells or the best k candidate target cells
- stopping conditions: stop logging when M samples after handover has been collected, or stop or terminate logging after T measurements without handover
- reporting conditions: any handover has occurred during the logging period

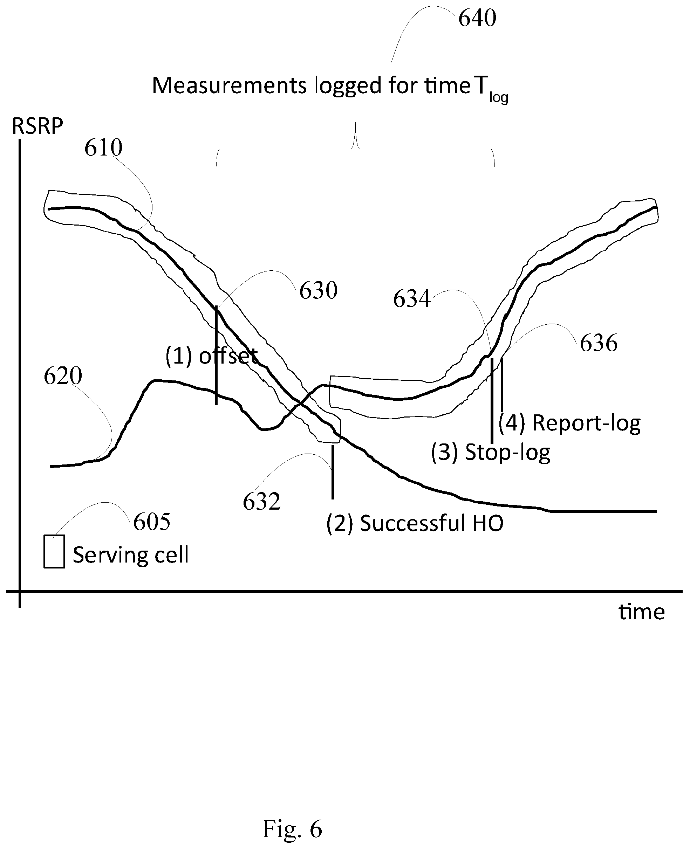

Fig. 6, Fig. 7 and Fig. 8 show, by way of examples, logging in different scenarios. The figures show the evolution of the RSRPs and the events that trigger the Start-log, Stop-log and Report-log or discard-log processes.

Fig. 6 shows, by way of example, logging a successful handover. Measured RSRPs 610, 620 of two cells are shown as function of time. Serving cell has been marked by a highlighting 605. Start-log process is triggered 630, i.e. the UE starts logging the measurements when offset (1) between serving cell 710 and target cell 720 is fulfilled, i.e. when the difference between the RSRP of the cells is smaller than a pre-determined value. Successful handover event (2) is occurred 632. In this example, the stopping condition is determined based on a logging timer which determines the measurement time since the latest handover. Thus, the Stop-log (3) is triggered 634 after the maximum logging timer expires. Then, the report-log (4) is triggered 636 by the handover event. For example, reporting condition may be defined as a time period after the handover event. In this example, the measurements are logged for time T_{log} 640. The generated report, or a compiled log, may comprise indications on the measurements, or at least part of the measurements, collected during this time. In addition, the report may comprise information on the handover, e.g. timepoint of the handover. For example, it may be have been defined in the configuration message that a certain number of measurements are reported before and after a successful handover.

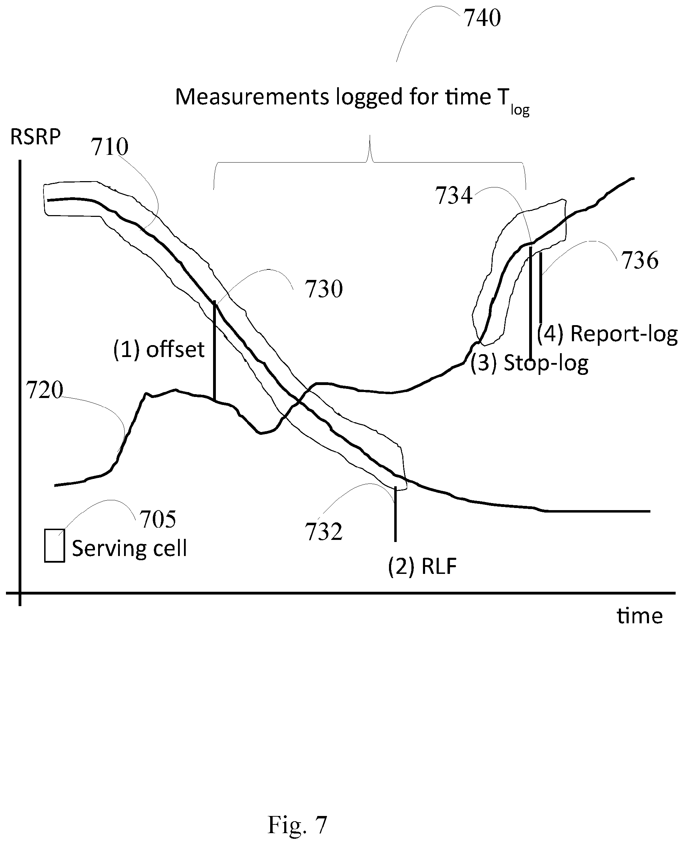

Fig. 7 shows, by way of example, logging an unsuccessful handover and a related radio link failure (RLF). Measured RSRPs 710, 720 of two cells are shown as function of time. Serving cell has been marked by a highlighting 705. Start-log process is triggered 730 when offset (1) between serving cell 710 and target cell 720 is fulfilled, i.e. when the difference between the RSRP of the cells is smaller than a pre-determined value. In this example, ML-model has not been able to predict timely handover, and therefore, handover does not happen but RLF event (2) occurs 732. Logging is continued after RLF until a Stop-log (3) condition is fulfilled 734 and then the logging is stopped. For example, the stopping condition here may be either the length of the log or the number of samples after the RLF. The Report-log (4) is triggered 736 by the occurrence of the RLF event. For example, reporting condition may be defined as a time period after the RLF. In this example, the measurements are logged for time T_{log} 740. The generated report, or a compiled log, may comprise indications on the measurements, or at least part of the measurements, collected during this time. In addition, the report may comprise information on the RLF, e.g. timepoint of the RLF. For example, it may be have been defined in the configuration message that a certain number of measurements are reported before and after possible RLF.

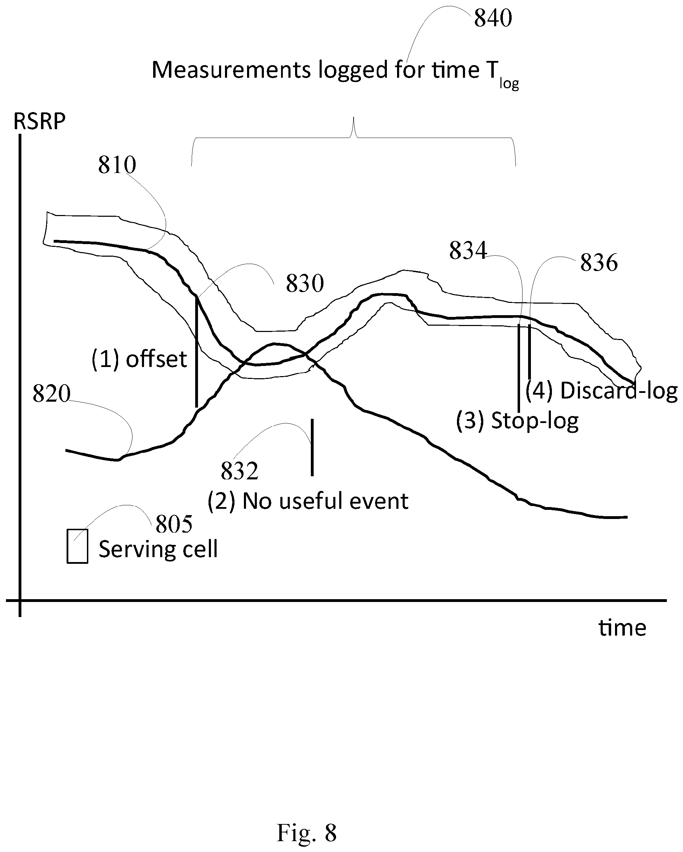

Fig. 8 shows, by way of example, discarding a log. In this case, no important information is captured by the log. Measured RSRPs 810, 820 of two cells are shown as function of time. Serving cell has been marked by a highlighting 805. Start-log process is triggered 830 when offset (1) between serving cell 810 and target cell 820 is fulfilled, i.e. when the difference between the RSRP of the cells is smaller than a pre-determined value. Here the starting condition, e.g. the offset, only recognized a temporary coverage island of the target cell which did not result in handover and/or radio link failure, i.e. no useful event (2) is detected 832. Stop-log (3) is triggered 834 after the maximum logging timer expires. Report-log is not triggered, since no handover-related event is detected in the log. Thus, the measurements logged for time T_{log} 840 are discarded 836 (Discard-log (4)).

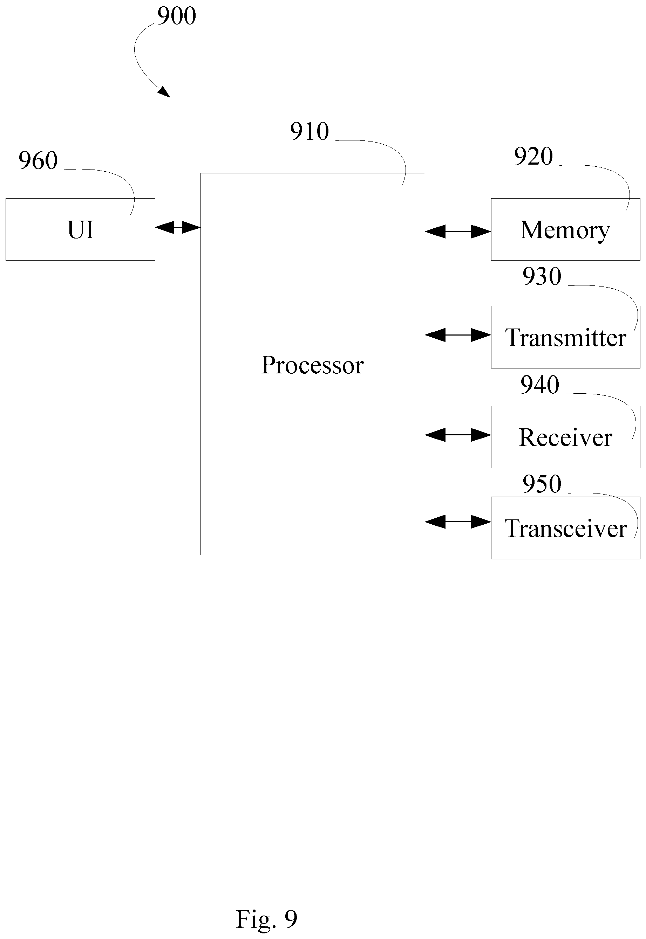

Fig. 9 shows, by way of example, an apparatus capable of performing the method as disclosed herein. Illustrated is device 900, which may be or may be comprised in, for example, a mobile communication device such as mobile or UE 100, 102 of Fig. 1 or UE 320 of Fig. 3, or the network node 340 of Fig. 3 configured to perform ML-based predictive handover. Comprised in device 900 is processor 910, which may comprise, for example, a single- or multi-core processor wherein a single-core processor comprises one processing core and a multi-core processor comprises more than one processing core. Processor 910 may comprise, in general, a control device. Processor 910 may comprise more than one processor. Processor 910 may be a control device. A processing core may comprise, for example, a Cortex-A8 processing core manufactured by ARM Holdings or a Steamroller processing core designed by Advanced Micro Devices Corporation. Processor 910 may comprise at least one Qualcomm Snapdragon and/or Intel Atom processor. Processor 910 may comprise at least one application-specific integrated circuit, ASIC. Processor 910 may comprise at least one field-programmable gate array, FPGA. Processor 910 may be means for performing method steps in device 900. Processor 910 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 900 may comprise memory 920. Memory 920 may comprise randomaccess memory and/or permanent memory. Memory 920 may comprise at least one RAM chip. Memory 920 may comprise solid-state, magnetic, optical and/or holographic memory, for example. Memory 920 may be at least in part accessible to processor 910. Memory 920 may be at least in part comprised in processor 910. Memory 920 may be means for storing information. Memory 920 may comprise computer instructions that processor 910 is configured to execute. When computer instructions configured to cause processor 910 to perform certain actions are stored in memory 920, and device 900 overall is configured to run under the direction of processor 910 using computer instructions from memory 920, processor 910 and/or its at least one processing core may be considered to be configured to perform said certain actions. Memory 920 may be at least in part external to device 900 but accessible to device 900.

Device 900 may comprise a transmitter 930. Device 900 may comprise a receiver 940. Transmitter 930 and receiver 940 may be configured to transmit and receive, respectively, information in accordance with at least one cellular or non-cellular standard. Transmitter 930 may comprise more than one transmitter. Receiver 940 may comprise more than one receiver. Transmitter 930 and/or receiver 940 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 900 may comprise a near-field communication, NFC, transceiver 950. NFC transceiver 950 may support at least one NFC technology, such as NFC, Bluetooth, Wibree or similar technologies.

Device 900 may comprise user interface, UI, 960. UI 960 may comprise at least one of a display, a keyboard, a touchscreen, a vibrator arranged to signal to a user by causing device 900 to vibrate, a speaker and a microphone. A user may be able to operate device 900 via UI 960, for example to accept incoming telephone calls, to originate telephone calls or video calls, to browse the Internet, to manage digital files stored in memory 920 or on a cloud accessible via transmitter 930 and receiver 940, or via NFC transceiver 950, and/or to play games.

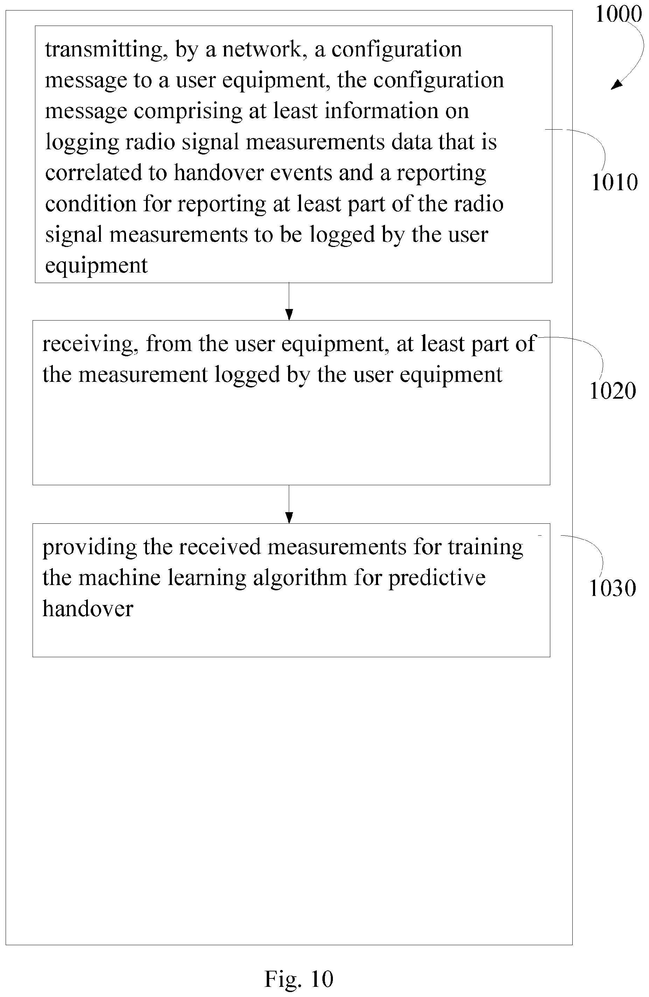

The data in the log reported from the UE to the network may be used in training a machine learning algorithm for predictive handover. Fig. 10 shows, by way of example, a flowchart of a method 1000 which may be performed e.g. by a network entity. The method 1000 comprises transmitting 1010, by a network, a configuration message to a user equipment, the configuration message comprising at least information on logging radio signal measurements data that is correlated to handover events and a reporting condition for reporting at least part of the radio signal measurements to be logged by the user equipment. The method 1000 comprises receiving 1020, from the user equipment, at least part of the measurement logged by the user equipment. The method 1000 may comprises providing 1030 the received measurements for training the machine learning algorithm for predictive handover.

## Claims

1. An apparatus (520) for measurement collection for training a machine learning algorithm for predictive handover, wherein the apparatus is a user equipment comprising means for:
receiving (530) a configuration message from a network (510), the configuration message comprising at least information on logging radio signal measurements data that is correlated to handover events and a reporting condition for reporting at least part of the radio signal measurements to be logged by the apparatus;
in response to fulfilling a starting condition, starting logging of measurements at least partly based on the configuration message, wherein the starting condition is stored in the apparatus and/or comprised in the configuration message;
in response to fulfilling (538) a stopping condition, checking whether the reporting condition is fulfilled, wherein the stopping condition is stored in the apparatus and/or comprised in the configuration message; and
either discarding the logged measurements if the reporting condition is not fulfilled (540) or reporting (546) to the network at least part of the logged measurements if the reporting condition is fulfilled (542),
wherein the starting condition is whether a difference between a reference signal received power of a serving cell and a candidate target cell is below or equal to a pre-determined offset, and
wherein the reporting condition is whether logged measurements comprise information on experienced handover event(s) and/or radio link failure(s).

2. The apparatus (520) of claim 1, wherein the information on logging radio signal measurements data that is correlated to handover events is indicative of at least one or more of:
measurement configuration indicating a number of measurements to be logged before and/or after a handover and/or a radio link failure;
measurement configuration indicating a frequency of measurements;
starting condition for logging;
indication on log entries;
stopping condition for logging.

3. The apparatus (520) of any preceding claim, wherein the stopping condition comprises at least one or more of:
a pre-determined time after a latest handover or radio link failure; and
a pre-determined number of measurements after a latest handover or radio link failure.

4. An apparatus (510) for measurement collection for training a machine learning algorithm for predictive handover, wherein the apparatus is a network node comprising means for:
transmitting (530) a configuration message to a user equipment (520), the configuration message comprising at least information on logging radio signal measurements data that is correlated to handover events including a starting condition for determining whether to starting logging measurements and a reporting condition for reporting at least part of the radio signal measurements to be logged by the user equipment;
receiving (546), from the user equipment, at least part of the measurements logged by the user equipment (520); and
providing the received measurements for training the machine learning algorithm for predictive handover (345),
wherein the starting condition is whether a difference between a reference signal received power of a serving cell and a candidate target cell is below or equal to a pre-determined offset, and
wherein the reporting condition is whether logged measurements comprise information on experienced handover event(s) and/or radio link failure(s).

## Patentansprüche

1. Einrichtung (520) für eine Messwertsammlung zum Trainieren eines Maschinenlernalgorithmus für eine prädikative Übergabe, wobei die Einrichtung eine Teilnehmereinrichtung ist, die Mittel für Folgendes umfasst:
Empfangen (530) einer Auslegungsnachricht von einem Netzwerk (510), wobei die Auslegungsnachricht mindestens Informationen zum Protokollieren von Funksignalmessdaten, die mit Übergabeereignissen korrelieren, und eine Meldebedingung zum Melden von mindestens einem Teil der Funksignalmessungen, die von der Einrichtung zu protokollieren sind, umfasst;
in Reaktion auf das Erfüllen einer Startbedingung Starten des Protokollierens von Messungen mindestens teilweise auf Basis der Auslegungsnachricht, wobei die Startbedingung in der Einrichtung gespeichert ist und/oder in der Auslegungsnachricht umfasst ist;
in Reaktion auf das Erfüllen (538) einer Stoppbedingung Prüfen, ob die Meldebedingung erfüllt ist, wobei die Stoppbedingung in der Einrichtung gespeichert ist und/oder in der Auslegungsnachricht umfasst ist; und
entweder Verwerfen der protokollierten Messungen, wenn die Meldebedingung nicht erfüllt ist (540), oder Melden (546) mindestens eines Teils der protokollierten Messungen beim Netzwerk, wenn die Meldebedingung erfüllt ist (542),
wobei die Startbedingung die ist, ob eine Differenz zwischen einer Referenzsignalempfangsleistung einer bedienenden Zelle und einem Zielzellenkandidaten unter einem vorbestimmten Versatz liegt oder mit diesem gleich ist, und
wobei die Meldebedingung die ist, ob protokollierte Messungen Informationen über erfahrene ein oder mehrere Übergabeereignisse und/oder Funklinkfehler umfassen.

2. Einrichtung (520) nach Anspruch 1, wobei die Informationen über das Protokollieren von Funksignalmessdaten, die mit Übergabeereignissen korrelieren, mindestens eines oder mehreres von Folgendem anzeigen:
einer Messauslegung, die eine Anzahl von Messungen anzeigt, die vor und/oder nach einer Übergabe und/oder einem Funklinkfehler zu protokollieren sind;
einer Messauslegung, die eine Häufigkeit von Messungen anzeigt;
Startbedingung für das Protokollieren;
Anzeige von Protokolleinträgen;
Stoppbedingung für das Protokollieren.

3. Einrichtung (520) nach einem der vorhergehenden Ansprüche, wobei die Stoppbedingung eines oder mehreres von Folgendem umfasst:
einer vorbestimmten Zeit nach einer letzten Übergabe oder einem letzten Funklinkfehler; und
einer vorbestimmten Anzahl von Messungen nach einer letzten Übergabe oder einem letzten Funklinkfehler.

4. Einrichtung (510) für eine Messwertsammlung zum Trainieren eines Maschinenlernalgorithmus für eine prädikative Übergabe, wobei die Einrichtung ein Netzwerkknoten ist, der Mittel für Folgendes umfasst:
Übertragen (530) einer Auslegungsnachricht zu einer Teilnehmereinrichtung (520), wobei die Auslegungsnachricht mindestens Informationen über das Protokollieren von Funksignalmessdaten umfasst, die mit Übergabeereignissen korrelieren, die eine Startbedingung zum Bestimmen, ob das Protokollieren von Messungen gestartet werden soll, und eine Meldebedingung zum Melden von mindestens einem Teil von Funksignalmessungen, die von der Teilnehmereinrichtung zu protokollieren sind, beinhalten;
Empfangen (546) von mindestens einem Teil der Messungen, die von der Teilnehmereinrichtung (520) protokolliert wurden, von der Teilnehmereinrichtung; und
Bereitstellen der empfangenen Messungen zum Trainieren des Maschinenlernalgorithmus für eine prädikative Übergabe (345),
wobei die Startbedingung die ist, ob eine Differenz zwischen einer Referenzsignalempfangsleistung einer bedienenden Zelle und einem Zielzellenkandidaten unter einem vorbestimmten Versatz liegt oder mit diesem gleich ist, und
wobei die Meldebedingung die ist, ob protokollierte Messungen Informationen über erfahrene ein oder mehrere Übergabeereignisse und/oder Funklinkfehler umfassen.

## Revendications

1. Appareil (520) pour la collecte de mesures pour entraîner un algorithme d'apprentissage machine pour un transfert intercellulaire prédictif, dans lequel l'appareil est un équipement utilisateur comprenant des moyens pour :
recevoir (530) d'un réseau (510) un message de configuration, le message de configuration comprenant au moins des informations sur la journalisation de données de mesures de signaux radio qui sont corrélées à des événements de transfert intercellulaire et une condition de rapport pour rapporter au moins une partie des mesures de signaux radio à journaliser par l'appareil ;
en réponse à la satisfaction d'une condition de démarrage, démarrer une journalisation des mesures en se basant au moins en partie sur le message de configuration, dans lequel la condition de démarrage est stockée dans l'appareil et/ou est comprise dans le message de configuration ;
en réponse à la satisfaction (538) d'une condition d'arrêt, vérifier si la condition de rapport est satisfaite, dans lequel la condition d'arrêt est stockée dans l'appareil et/ou est comprise dans le message de configuration ; et
soit rejeter les mesures journalisées si la condition de rapport n'est pas satisfaite (540), soit rapporter (546) au réseau au moins une partie des mesures journalisées si la condition de rapport est satisfaite (542),
dans lequel la condition de démarrage est si une différence entre une puissance reçue de signal de référence d'une cellule de desserte et celle d'une cellule cible candidate est inférieure ou égale à un décalage prédéterminé, et
dans lequel la condition de rapport est si les mesures journalisées comprennent des informations sur un ou des événement(s) de transfert intercellulaire et/ou une ou des défaillance(s) de liaison radio rencontré(es).

2. Appareil (520) selon la revendication 1, dans lequel les informations sur la journalisation de données de mesures de signaux radio qui sont corrélées à des événements de transfert intercellulaire indiquent au moins une ou plusieurs parmi :
une configuration de mesure indiquant un nombre de mesures à journaliser avant et/ou après un transfert intercellulaire et/ou une défaillance de liaison radio ;
une configuration de mesure indiquant une fréquence de mesures ;
une condition de démarrage pour la journalisation ;
une indication sur des entrées de journal ;
une condition d'arrêt pour la journalisation.

3. Appareil (520) selon l'une des revendications précédentes, dans lequel la condition d'arrêt comprend au moins un ou plusieurs parmi :
un temps prédéterminé après un dernier transfert intercellulaire ou une dernière défaillance de liaison radio ; et
un nombre de mesures prédéterminé après un dernier transfert intercellulaire ou une dernière défaillance de liaison radio.

4. Appareil (510) pour la collecte de mesures pour entraîner un algorithme d'apprentissage machine pour un transfert intercellulaire prédictif, dans lequel l'appareil est un nœud de réseau comprenant des moyens pour :
transmettre (530) un message de configuration à un équipement utilisateur (520), le message de configuration comprenant au moins des informations sur la journalisation de données de mesures de signaux radio qui sont corrélées à des événements de transfert intercellulaire comportant une condition de démarrage pour déterminer s'il faut démarrer une journalisation des mesures et une condition de rapport pour rapporter au moins une partie des mesures de signaux radio à journaliser par l'équipement utilisateur ;
recevoir (546) de l'équipement utilisateur au moins une partie des mesures journalisées par l'équipement utilisateur (520) ; et
fournir les mesures reçues pour entraîner l'algorithme d'apprentissage machine pour un transfert intercellulaire prédictif (345),
dans lequel la condition de démarrage est si une différence entre une puissance reçue de signal de référence d'une cellule de desserte et celle d'une cellule cible candidate est inférieure ou égale à un décalage prédéterminé, et
dans lequel la condition de rapport est si les mesures journalisées comprennent des informations sur un ou des événement(s) de transfert intercellulaire et/ou une ou des défaillance(s) de liaison radio rencontré(es).
